# EUROPEAN PATENT APPLICATION

(11) **EP 0 932 289 A2**
(43) Date of publication of application: **28.07.1999**
(21) Application number: 98309897.1
(22) Date of filing: 03.12.1998
(51) Int. Cl.: H04M 1/02, H04M 1/04

(54) **A radio handset**

(30) Priority: 31.12.1997 GB 9727509; 23.10.1998 GB 9823281
(71) Applicant: NOKIA MOBILE PHONES LTD., 02150 Espoo (FI)
(72) Inventor: Wong, Simon, Mid Levels (HK); Briffett, Neil, Farnham, Surrey GU9 0RA (GB)
(74) Representative: Jeffery, Kendra Louise

(57) **Abstract**

A radio handset (20) is provided with an integral stand (22)either hinged to its main body or battery, to support it in its upright position. The stand may be in the form of a cover, such as a flip or slide and the operation of the handset may be controlled depending upon the position of the cover.

## Description

The present invention relates to radio handsets, and in particular stands for radio handsets.

Currently, when a user has a phone on standby in his office he will place it in a deskstand, rather than flat on his desk, so that it is easily accessible should he wish to make or answer a call. However, in order for him to always have his phone so accessible, the user either needs to have a number of deskstands (e.g. both at home and in the office) or he needs to carry one around with him. The first altemative is expensive, and the second unfeasible as deskstands are often bulky accessories.

According to the present invention there is provided a radio handset comprising a body having a front face with a user interface, a stand for supporting the body, and a hinge for rotatably coupling the body and the stand between a first position in which the stand is non-supporting and a second position in which the stand supports the body in a substantially upright position with the front face accessible to the user.

The provision of a handset with an integral stand provides an inexpensive and non-bulky solution to improve the handset's accessibility.

The stand can be hinged from the top of the handset, for example. However, it is preferably hinged to the body of the handset towards its base. This provides greater stability when the stand is supporting the phone upright.

Stability is further improved if the handset is designed so that the stand is rotated from one side of the handset to the other when being moved to support the handset. A reason for this is because the centre of gravity of the handset is over the stand when it is in its supporting position. For example, the hinge may be coupled to the body on its front face whilst the stand is on the other side of the body when in its second position.

The stand may be a dedicated stand or it may also perform another function, such as acting as a cover for the front face of the phone. For example, it might be a flip or a slide. The latter minimises the number of movable parts on the handset and enables the provision of a number of extra functions as outlined below.

A cover may slide to expose part of the front face of the handset and then rotate until it is substantially parallel to the base of the handset, to support the handset. Altematively, the cover may rotate to expose part of the front face of the handset, and then continue to rotate until it is substantially parallel to the base of the handset, to support the handset.

The hinge may be attached to the main housing of the phone, or altematively to the battery. The latter allows for the introduction of this feature for existing handsets, with the user only having to purchase a new battery.

The radio handset may further comprise control means for controlling operation of the handset depending upon the position of the stand. For example, control means may cause an off hook condition when the cover is closed, and on-hook when it is open (in its first position). Further, the radio may have an integrated loudspeaker which the control means causes to operate when the stand is supporting the handset.

Operation of the handset by the control means may further depend upon the previous position of the stand. For example, it might only activate the loudspeaker when the stand is rotated from the opened position to the supporting (second) position, and maintain the phone in standby if moved directly from the stored or closed position. Similarly, the control means may place the handset in the off-hook condition when the stand is rotated from the supporting position to the opened position. In this way, an incoming call is answered, or a previously dialled outgoing number is sent in a single handed operation.

According to another aspect of the present invention, there is provided a battery for a radio handset comprising a housing having means for attachment to a radio handset, a stand for supporting the housing, and a hinge for rotatably coupling the housing and the stand between a first position in which the stand is non-supporting and a second position in which the stand supports the housing and attached radio handset in a substantially upright position.

Embodiments of the present invention will now be described, by way of example, with reference to the accompanying drawings, of which:
Figure 1 is a plan view of a portable transceiver according to a preferred embodiment of the present invention;
Figure 2a is a side view of Figure. 1;
Figure 2b is a side view of the transceiver of Figure 1, but with its cover in a transceiver supporting position;
Figure 3 is a perspective exploded view illustrating specific components of the transceiver of Figures 1 and 2 which embody the present invention;
Figure 4 is a detail perspective view of assembled components illustrated in Figure 3;
Figure 5 is a cross section view taken along line 5-5 in Figure 4;
Figure 6A is cross section view taken along line 6A-6A in Figure 5 to illustrate one relative position of movable components;
Figures 6B to 6D are cross section views, similar to Figure 6A illustrating other successive relative positions of the movable components;
Figures 7A to 7D illustrate a portable transceiver according to another preferred embodiment of the present invention, with its cover in different positions; and
Figures 8A to 8C illustrate a portable transceiver according to the present invention, with an alternative cover.

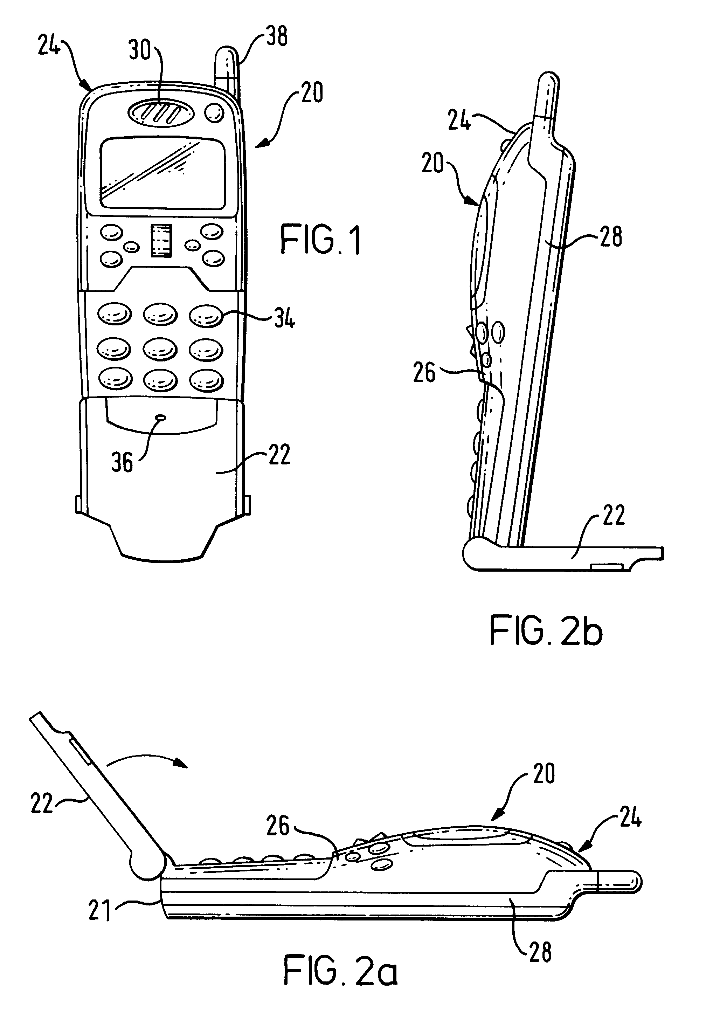

There will first be described a schematic arrangement of a radio handset or portable transceiver 20 which embodies the present invention with reference to Figures 1 to 6. In both Figures 1 and 2a, an opened condition of a cover 22 of the portable transceiver is depicted, and in Figure 2b, the cover is depicted acting as a stand, supporting the transceiver. A main body 24 of the portable transceiver is comprised of an upper case 26 and a lower case 28. A receiver section 30 accommodating a speaker therein is provided at an upper end portion of the main body 24. A display section 32 such as a liquid crystal display and a keypad section 34 having a dialing function or the like are provided at a middle portion of the main body 24. A transmitter section 36 accommodating a microphone therein may be provided at a lower end portion of the main body 24. The reason for providing the transmitter section 36 at the lower end portion of the main body 24 is that the distance between the receiver section 30 and the transmitter section 36 is intended to be made as large as possible notwithstanding the fact that the main body 24 is so compact.

Reference numeral 38 denotes an antenna extendably provided at a side portion of the main body 24. The cover 22 is rotatably mounted in the vicinity of the lower end portion of the main body 24. The cover 22 functions to cover at least some of the keypad section 34 when it is in a closed condition, while functioning as a voice reflecting and collection board for the transmitter section 36 when it is in an opened condition (Figure 1 and 2A) , and as a stand when in a supporting position (Figure 2B). While the cover 22 is rotatably mounted to the main body 24 as mentioned above, it is stably held, in one instance, in a closed position overlying the keypad section 34, in another instance, in an operative position inclined at a predetermined angle with respect to the main body 24 by means of a cover holding mechanism which will be hereinafter described, and in a further instance it is stably held in a supporting position underlying the bottom surface 21 of the main body 24.

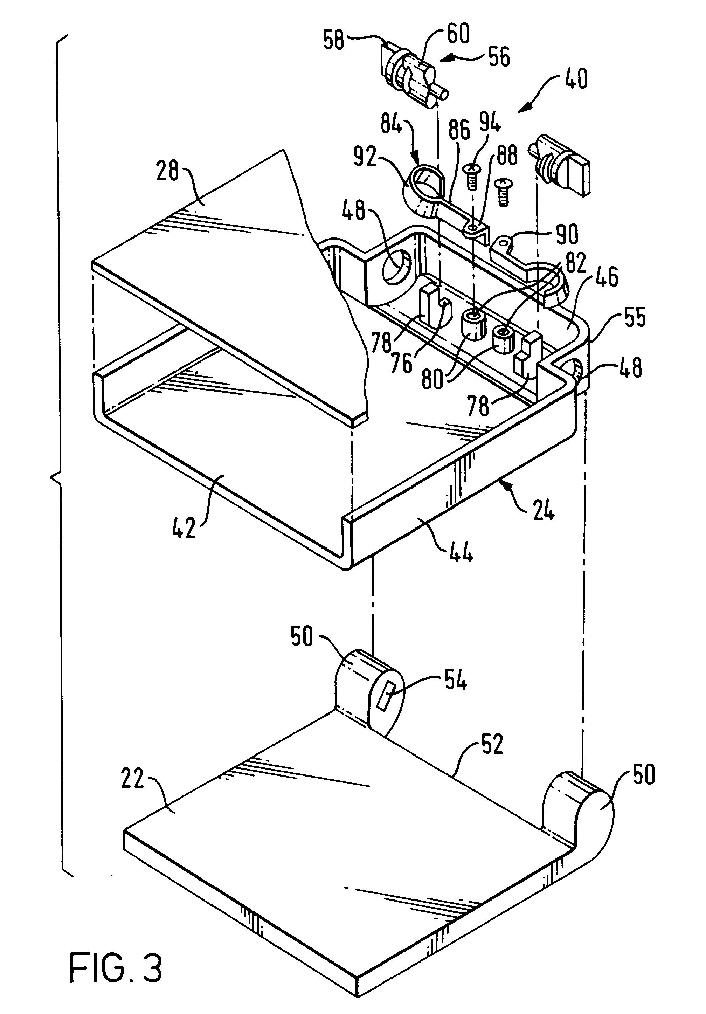

Turn now to Figures 3-5 for the description of a hinge mechanism 40 for pivotally mounting the cover 22 on the main body 24. The hinge mechanism serves to keep the keypad cover in either the opened, closed or supporting position. In a manner to be described, the hinge mechanism also serves to retum the cover to a stable (opened) position if the cover is moved beyond that position. The opened position is about 135° from the stable closed position and supporting position.

The main body 24 includes a base 42, and sidewalls 44 and an endwall 46 upstand from the base. Opposed aligned mounting bores are formed in the sidewalls 44 adjacent the endwall 46 and each mounting bore is a throughbore.

As noted earlier, the cover 22 is pivotally mounted on the main body 24 for movement between a closed position generally coplanar with and overlying the keypad section 34, an operative position angularly disposed relative to the main body, and a supporting position generally coplanar with and underlying the bottom surface 21 of the main body 24. The cover includes a pair of spaced apart ears 50 projecting from an end 52 of the cover 22. The ears have opposed key slots 54 formed therein so as to be aligned with the mounting bores 48 in the sidewalls when the cover is attached to the main body. The sidewalls 44 may be recessed as indicated at 55, in order to properly mate with the ears 50 while maintaining the overall rectangular outline for the transceiver 20.

A pair of hinge shafts 56 are rotatably received, each in an associated one of the mounting bores 48 in the sidewalls 44 on the main body. Each hinge shaft includes, at one end, a key member 58 engageable with an associated one of the key slots 54 in the opposed ears 50 for rotation therewith and a central member 60 having a uniformly contoured outer surface defined by elevationally opposed convex shaped lobes 62, laterally opposed concave shaped depressions 64, and smooth transition zones 66 joining the lobes and the depressions.

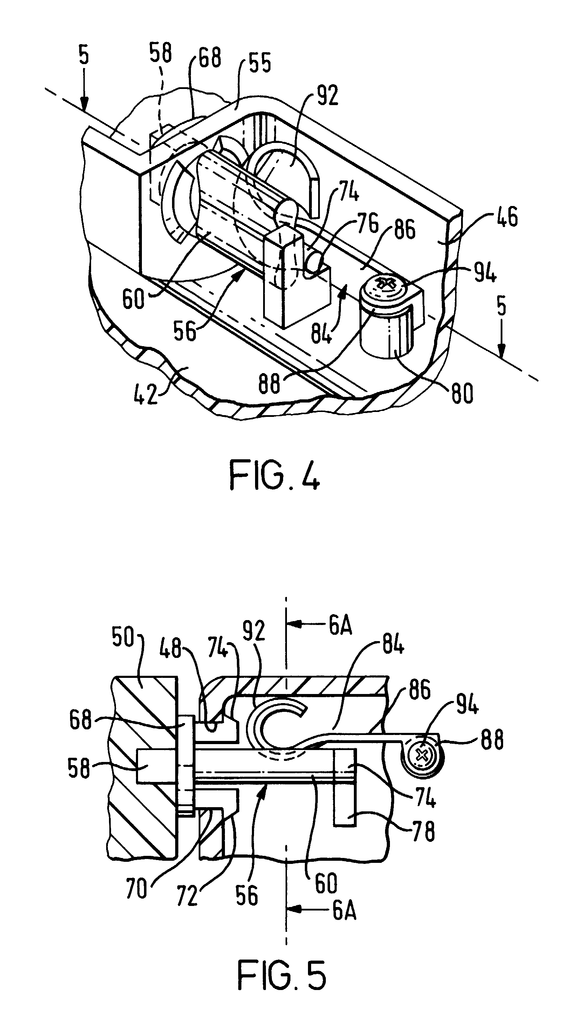

Each of the hinge shafts 56 further includes a bearing plate 68 intermediate the key member 58 and the central member 60. Additionally, a plurality of resilient locking fingers 70 are fixed to the bearing plate 68 and extend from a plurality of circumferentially spaced locations thereon and at similar radial distances from a longitudinal axis of the hinge shaft 56 in a direction away from the key member. Each of the locking fingers 70 terminates at a transversely extending locking tang 72. Each locking tang has a cam surface 74 (Figure 5) which is engageable with an associated one of the mounting bores 48 upon insertion of the hinge shaft into an outside end of its associated mounting bore, such that the locking tangs cause the locking fingers to be depressed toward the longitudinal axis of the hinge shaft 56 until they exit from an inside end of the mounting bore. Upon exiting from the mounting bore 48, the locking fingers 70 snap radially outwardly and the locking tangs 72 prevent removal of the hinge shaft from the sidewall 44. Each of the hinge shafts 56 also includes a stub shaft 74 which extends away from the central member 60. The stub shaft 74 is rotatably engageable with a rib bearing surface 76 which will now be described.

A pair of spaced apart integral ribs 78 are upstanding from the base 42, each rib being spaced from an associated one of the sidewalls 44. Each rib also has the bearing surface 74 formed thereon on which the stub shaft 74 is rotatably engaged.

Also viewing Figure 3, a pair of spaced apart integral support posts 80 upstand from the base 42 intermediate the sidewalls 44 and each of the support posts has a vertically oriented bore 82 therein. A pair of spring members 84 are interposed between the end wall 46 and the central member 60 of each of the hinge shafts 56, in each instance to bias the stub shaft 74 into engagement with the rib bearing surface 76. Each of the spring members 84 includes an elongated shank 86 with a transverse mounting flange 88 at one end thereof having a fastener hole 90 therein and a generally U-shaped resilient biasing portion 92. A fastener 94 which may be a self-threading screw is receivable through the fastener hole 90 in an associated one of the mounting flanges 88 and becomes threadedly engageable with the bore 82 in the associated support post 80 for mounting each spring member 84 to the main body 24. One of the spring members 84 is interposed between the endwall 46 and the contoured outer surface of the central member 60 for holding the stub shaft 74 firmly in engagement with the rib bearing surface 76. The other of the spring members 84 is reversed as is its associated rib 78. In this reversed construction, the biasing portion 92 of the spring member 84 bears against the central member 60 of its associated hinge shaft 56 in the direction of the endwall 46.

The biasing portion 92 of each of the spring members 84 has a convex shaped outer surface which is biased into engagement with the uniformly contoured outer surface of the central member 60 of the hinge shaft 56 for maintaining the cover 22 either in the closed position, in at least one operative position relative to the main body 24, or in the supporting position.

To complete the description of the construction of the main body 24, viewing Figure 3 again, it is seen that the lower case 28 is suitably attached to the upstanding sidewalls 44 and endwall 46 in a manner not shown so as to be generally parallel to and spaced from the base. Being so positioned, the cover plate thereby encapsulates the hinge mechanism 40 within the main body 24 to keep it protected and isolated from the elements.

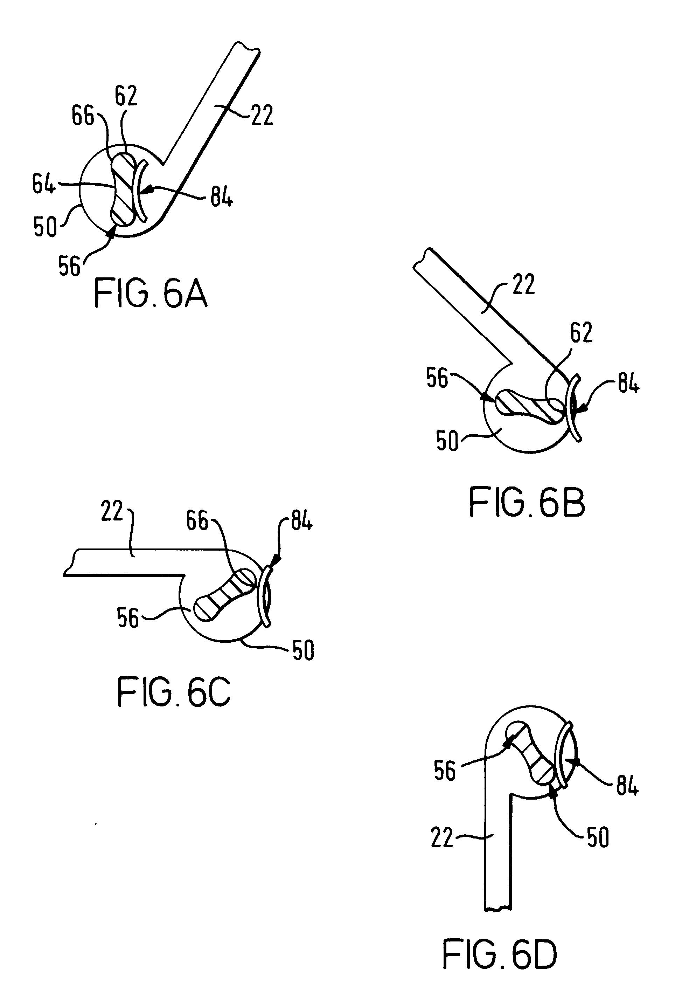

As noted, each of the hinge shafts 56 include a central member 60 which is engaged by the biasing portion 92 of an associated one of the spring members 84. It can be the that the central member 60 is a "peanut" shaped section against which the spring member 84 bears or presses. This spring member associated with each hinge shaft 56 serves to rotate the shaft about its longitudinal axis to either a closed position, a stable opened position or a supporting position. The closed position is illustrated in Figure 6C wherein the spring member 84 bears against the transition zone 66 of the central member 60 of the hinge shaft 56 and causes a biasing moment in a counterclockwise direction to hold the cover 22 firmly against the main body 24. As the cover 22 is opened, it passes through a "metastable" position illustrated in Figure 6B whereat the spring member 84 bears against the lobe 62. With continued rotation of the cover 22, it reaches the operative position illustrated in Figure 6A which occurs with the cover inclined about 135° with respect to the plane of the main body. With the cover 22 so inclined, each of the spring members 84 is engaged with the depressions 64 of an associated one of the central members 60. The cross sectional shape of the face of the spring member bearing on the hinge shaft is suitably curved to conform to the "peanut" cross section of the hinge shaft.

The supporting position is illustrated in Figure 6D in which the spring member 84 bears against the transition zone 66 of the central member 60 of the hinge shaft 56 and causes a biasing moment in a clockwise direction to hold the cover 22 firmly against the bottom surface 21 of the main body 24. When the handset is picked up, a force is applied to the cover 22 to cause an anticlockwise moment passing through a "metastable" position at which the spring member 84 bears against the lobe 62. With continued rotation of the cover 22, it again reaches the operative position illustrated in Figure 6A which occurs with the cover inclined about 135° with respect to the plane of the main body.

This arrangement of the curved spring members and "peanut" shaped hinge shaft will provide a more defined feeling to the user when the cover 22 is opened, closed or used as a stand. The forces to close the cover will be greater for a given spring force due to the "peanut" shape. In this manner, a greater opening, closing and standing torque is provided while using a weaker spring.

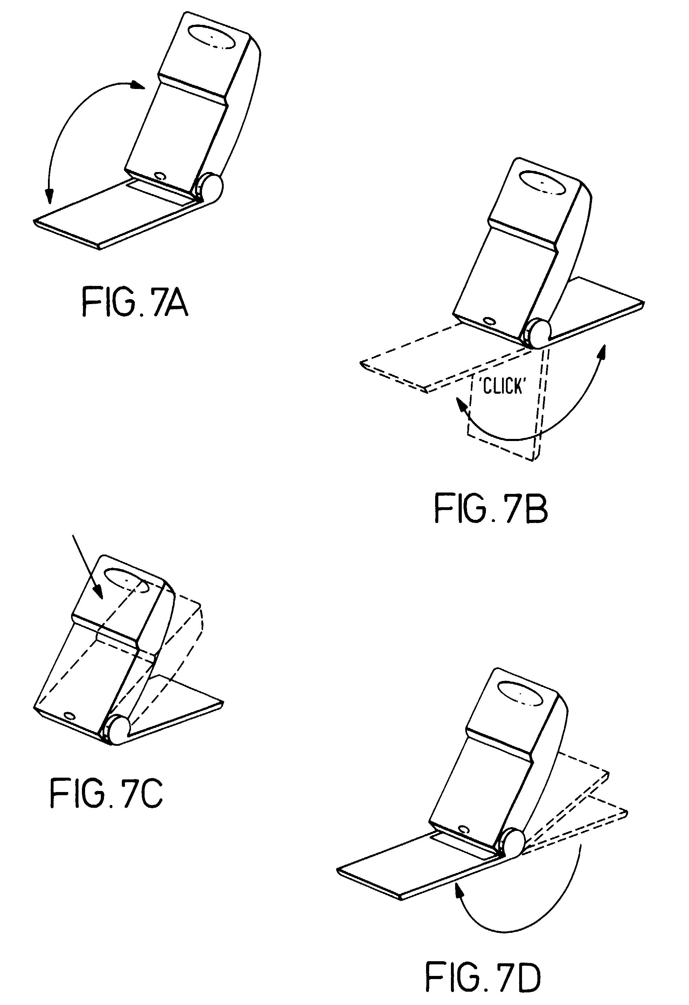

Figure 7 illustrates another embodiment of the present invention, in which the cover again functions as the stand. Figure 7a shows the cover in its operative position, whilst in Figure 7b the cover has been rotated to its supporting position to act as a stand. In this embodiment, a spring force causes the flip to click into the support position and auto lock. Figure 7c shows how the cover is unlocked from its support position, by the user pressing down against the desk or other supporting surface and Figure 7d illustrates the retum of the cover to its operative position. The mechanism may be damped to provide a smooth return.

The handset of this embodiment is provided with an integrated loudspeaker unit. Also, its processor controls operation of the handset depending upon the position and movement of the cover. Movement of the cover from its closed position to its operative position in Figure 7a causes the handset to go from on hook to off hook, so that the user can make or answer a call. Movement of the cover to its support position shown in Figure 7b depends upon the previous position. If moved from the dosed position and the handset is in standby mode, then it remains in standby mode. By contrast, if the cover is moved from its operative position, then handsfree mode (i.e. the loudspeaker) is activated. Movement of the cover from its supporting position to its operative position, as shown in Figure 7d, activates the off hook condition, thereby enabling an incoming call to be answered or a previously keyed in or retrieved phone number to be dialed. Finally, if the cover is moved from either its operative or supporting position to its closed position, the processor initiates an on hook condition, whereby it either maintains the phone in standby mode or ends a call.

One advantage of this embodiment is that answering a call is very quick and simple. Either, the send key is depressed and the call is taken over the loudspeaker, or for a private conversation, the handset is pressed and then picked up in a single-handed operation.

Also, the battery and/or handset of this embodiment has a charger socket which is accessible when the stand is in its supporting position, so that the handset can be charged when in its upright position. It may, for example, be provided on the front top or side faces of the handset, or the front face of the battery and is preferably hidden (e.g. under a flap). This charger socket may be in addition to a standard connector on the base of the handset, or altematively, the standard connector (including the charger socket) may be on an accessible face of the handset or battery instead of the base of the handset. If two charger sockets are provided, the control means may switch connection to the appropriate socket, depending upon the position of the stand. For example, it may provide connection of the accessible charger socket when the stand is in/moved to its supporting position, and connection of the socket on the base of the phone when the stand is in/moved to a non-supporting position. Altematively, they may both be permanently connected.

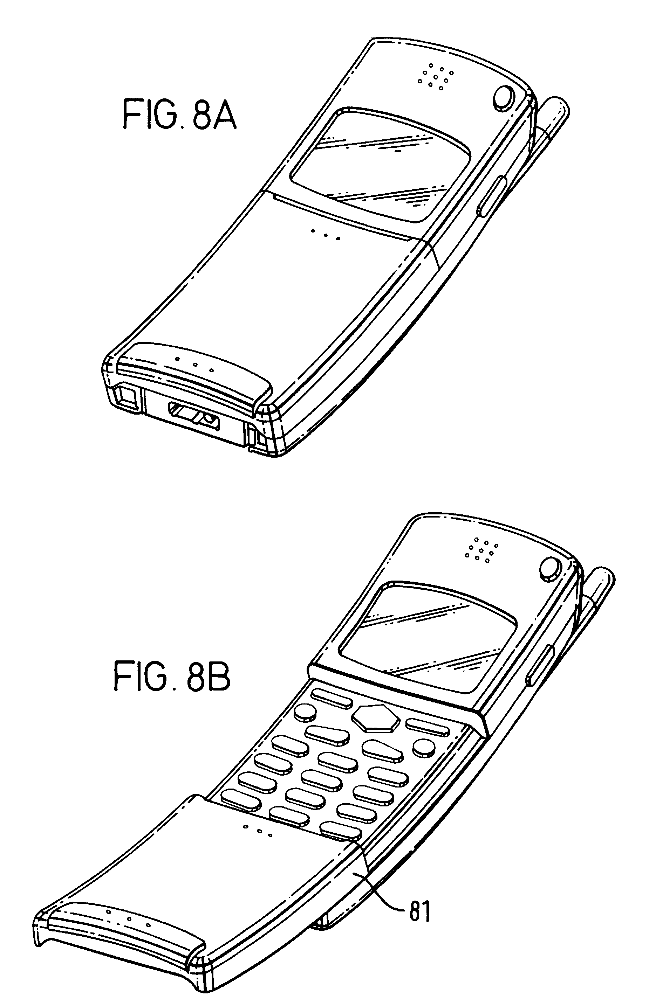

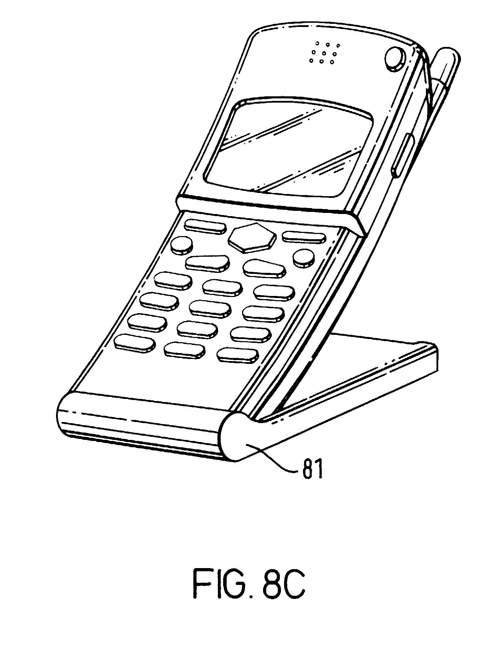

Figure 8 illustrates another embodiment of the present invention, in which the cover again functions as the stand. However, in this embodiment the cover slides between the closed and operative positions and rotates between the operative and supporting positions. Figure 8a shows the cover in its closed position, whilst in Figure 8b the cover has been slid to its operative position. The upper end 81 of the cover is hinged to the bottom of the body of the phone so that the cover can be rotated to support the handset as illustrated in Figure 8c.

As can be seen from Figure 8c, the phone is supported so that it leans back towards the cover slightly. This provides additional stability to such an arrangement where the cover is rotated to face the rear of the body and still provides accessibility of the front face of the handset to the user.

While preferred embodiments of the invention have been disclosed in detail, it should be understood by those skilled in the art that various other modifications may be made to the illustrated embodiments without departing from the scope of the invention as described in the specification and defined in the appended claims.

For example, whilst the drawings show the stand hinged to the main housing of the handset, it may altematively be attached to the handset's battery. It could hinge from the top to form an apex with the battery, or alternatively, it may be hinged at the bottom to fold down in an orthogonal manner and thus provide a stable platform for supporting the handset in a substantially vertical position.

## Claims

1. A radio handset comprising:
a body having a front face with a user interface;
a stand for supporting the body; and
a hinge for rotatably coupling the body and the stand between a first position in which the stand is non-supporting and a second position in which the stand supports the body in a substantially upright position with the front face accessible to the user.

2. A radio handset as claimed in claim 1, wherein the hinge couples the stand to the body towards the base of the body and the stand is substantially parallel to the base of the body when it is in said second position.

3. A radio handset as claimed in claim 2, which is arranged such that the hinge is coupled to the body on its front or rear face and the stand is on the other side of the body when in said second position.

4. A radio handset as claimed in any preceding claim, wherein the stand covers at least a portion of the front face of the body when in a stored position.

5. A radio handset as claimed in claim 4, wherein the stand is mounted for slidable movement between said stored position and said first position.

6. A radio handset as claimed in claim 4, wherein the hinge further rotatably couples the body and the stand between said stored position and said second position.

7. A radio handset as claimed in any of claims 1 to 3, wherein the body comprises a battery and the hinge couples the stand to the battery.

8. A radio handset as claimed in any preceding claim, further comprising control means for controlling operation of the handset depending upon the position of the stand.

9. A radio handset as claimed in claim 8, wherein the control means further depends upon the previous position of the stand.

10. A radio handset as claimed in claim 9, wherein the control means activates a loudspeaker when the stand is rotated from said first position to said second position.

11. A radio handset as claimed in claim 9, wherein the control means places the handset in the off-hook condition when the stand is rotated from said second position to said first position.

12. A radio handset as claimed in any preceding claim, further comprising a charger interface which is accessible when the stand is in the second position.

13. A radio handset as claimed in claim 12, comprising a further charger interface which is inaccessible when the stand is in the second position.

14. A radio handset as claimed in claim 13 when dependent upon claim 8, wherein the control means controls connection of the charging circuitry to the charger interface or the further charger interface depending upon the position of the stand.

15. A battery for a radio handset comprising:
a housing having means for attachment to a radio handset;
a stand for supporting the housing; and
a hinge for rotatably coupling the housing and the stand between a first position in which the stand is non-supporting and a second position in which the stand supports the housing and attached radio handset in a substantially upright position.
